# FASCICULE DE BREVET EUROPEEN

(11) **EP 2 852 482 B1**
(45) Date de publication et mention de la délivrance du brevet: **03.03.2021**
(21) Numéro de dépôt: 13723796.2
(22) Date de dépôt: 21.05.2013
(51) Int. Cl.: B29C 33/00, B29C 33/04, B29C 49/42, B29C 49/48, F16L 37/084

(54) **DISPOSITIF DE FABRICATION DE RECIPIENTS COMPORTANT UN MOULE ET UNE FICHE DE RACCORDEMENT FLUIDIQUE MUNIE DE MOYENS DE SERRAGE CONTRE LE MOULE**
VORRICHTUNG ZUR HERSTELLUNG VON BEHÄLTERN MIT EINER FORM UND EINEM FLUIDISCHEN KOPPELSTECKER MIT VORRICHTUNG ZUM KLEMMEN GEGEN DIE FORM
DEVICE FOR THE MANUFACTURE OF CONTAINERS COMPRISING A MOULD AND A FLUIDIC COUPLING PLUG FITTED WITH MEANS FOR CLAMPING AGAINST THE MOULD

(30) Priorité: 21.05.2012 FR 1254601
(43) Date de publication de la demande: 01.04.2015
(73) Titulaire: Sidel Participations, 76930 Octeville-sur-Mer (FR)
(72) Inventeur: CIRETTE, Damien, F-76930 Octeville sur Mer (FR); ROSSETTI, Alexandre ASSYSTEM E&OS, 14000 Caen (FR); LEPECHOUR, Anthony, F-76930 Octeville sur Mer (FR)
(74) Mandataire: Sidel Group
(86) Numéro de dépôt international: PCT/EP2013/060366
(87) Numéro de publication internationale: WO 2013/174790

(56) Documents cités:
- FR-A5- 2 122 880
- US-A- 4 518 338
- US-A1- 2011 024 952
- US-B1- 6 343 630

## Description

L'invention concerne un dispositif de fabrication de récipients par soufflage comportant un moule régulé thermiquement.

L'invention concerne plus particulièrement un dispositif de fabrication de récipients par soufflage, le dispositif comportant :
- un moule qui comporte une paroi définissant une cavité de moulage, le moule étant muni d'au moins une canalisation pour la circulation d'un fluide caloporteur, cette canalisation présentant sur une face externe du moule un orifice d'entrée du fluide caloporteur et un orifice de sortie du fluide caloporteur ;
- un support dans lequel le moule est monté de manière amovible ;
- une fiche munie d'un conduit d'amenée du fluide caloporteur et d'un conduit d'évacuation du fluide caloporteur, la fiche étant montée coulissante longitudinalement sur le support entre une position avant de connexion dans laquelle la fiche est emboîtée avec les orifices d'entrée et de sortie du moule et dans laquelle le conduit d'amenée et le conduit d'évacuation sont raccordés simultanément avec l'orifice d'entrée et l'orifice de sortie, respectivement, et une position arrière de déconnexion dans laquelle la fiche est déboîtée des orifices d'entrée et de sortie est du moule.

Rappelons que le soufflage d'un récipient a lieu dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, laquelle est préalablement chauffée de manière à permettre sa déformation plastique.

Il est connu de munir le moule d'un système de régulation thermique. Selon les applications auxquelles sont destinés les récipients, soit on refroidit le moule afin de maintenir sa température au-dessous de la température de transition vitreuse (c'est notamment le cas dans la fabrication des récipients destinés à recevoir des eaux plates, le moule étant maintenu à une température comprise entre 20 et 65°C), soit on le chauffe à des températures supérieures à la température de transition vitreuse, afin de conférer au matériau une cristallinité suffisante pour le rendre résistant à la déformation lors d'un remplissage à chaud (récipient dit HR, de l'anglais heat résistant).

La régulation thermique est réalisée par circulation d'un fluide caloporteur (il s'agit généralement d'eau ou d'huile) dans au moins une canalisation formée dans la paroi du récipient. Selon que l'on souhaite réguler thermiquement le moule en totalité ou en partie, la canalisation peut s'étendre sur toute la hauteur du moule, ou être localisée dans une zone particulière (par exemple à proximité du col ou du fond du récipient). La canalisation débouche généralement sur une face externe du moule et présente un orifice d'entrée, raccordé à un conduit d'amenée du fluide, et un orifice de sortie, raccordé à un conduit d'évacuation du fluide, dont la circulation est assurée par une pompe externe au moule.

Lors des opérations de réglage, au cours desquelles on remplace les moules, les conduits doivent être débranchés du moule à démonter, puis être rebranchés sur le nouveau moule.

Les brevets américains US-A-6.444.159 et US-A-6.447.281 au nom de Sidel, Inc. illustrent cette technologie.

"Par ailleurs le documents US2011/024952 décrit un dispositif de moulage de récipients en plastique. Les documents FR2122880 et US4518338 décrivent des mécanismes de raccordement de conduits".

On a déjà proposé de faciliter le branchement et le débranchement des conduits d'amenée et d'évacuation du fluide caloporteur grâce à une fiche équipée d'un mécanisme de connexion rapide des conduits sur le moule. Une telle solution est par exemple illustrée dans le document FR-A-2.903.932.

L'invention propose de perfectionner une telle fiche pour réaliser une connexion/déconnexion encore plus rapide.

L'invention permet aussi d'assurer que le raccordement des conduits sur le moule est correctement effectué.

A cet effet, l'invention propose un dispositif de fabrication de récipients par soufflage selon les caractéristiques de la revendication 1.

Selon l'invention :
- les moyens de serrage permettent la fixation amovible de la fiche sur le moule en position de connexion ;
- les moyens de serrage comportent :
   -- un mentonnet qui est porté fixe par le moule en avant de la fiche lorsque le moule est monté sur le porte-moule ; et
   -- un doigt de serrage qui est porté de manière mobile sur la fiche entre une position de serrage dans laquelle le doigt est accroché derrière le mentonnet de manière à serrer longitudinalement la fiche contre le moule, et une position de libération dans laquelle le doigt est décalé par rapport au mentonnet pour permettre le coulissement de la fiche vers sa position arrière de déconnexion.

Selon d'autres caractéristiques de l'invention:
- en position de libération, le doigt est décalé transversalement par rapport au mentonnet ;
- le doigt est monté pivotant autour d'un axe vertical sur la fiche ;
- le doigt est rappelé élastiquement vers sa position de serrage avec un effort de serrage suffisant pour emboîter complètement la fiche avec les orifices d'entrée et de sortie du moule ;
- le doigt est fixé avec un bras de levier qui permet de commander le doigt de serrage vers sa position de libération lorsque l'extrémité du bras de levier est sollicitée transversalement ;
- la fiche comporte un ergot de commande en coulissement qui est porté fixe par la fiche ;
- le doigt de serrage est maintenu en position par un mécanisme à genouillère qui est porté par la fiche ;
- le doigt de serrage est commandé dans sa position de serrage par un mécanisme à came ;
- le moule et la fiche sont munis de moyens de raccordement électrique comportant au moins un premier connecteur porté par le moule et un deuxième connecteur complémentaire porté par la fiche, le premier connecteur et le deuxième connecteur étant susceptibles d'être emboîtés longitudinalement.

D'autres caractéristiques et avantages de l'invention apparaitront au cours de la lecture de la description détaillée qui va suivre pour la compréhension de laquelle on se reportera aux dessins annexés parmi lesquels :
- la figure 1 est une vue en coupe horizontale selon le plan de coupe 1-1 de la figure 4 qui représente des fiches de raccordement à un circuit de fluide caloporteur en position de connexion avec un moule selon un premier mode de réalisation de l'invention ;
- la figure 2 est une vue en perspective qui représente le moule de la figure 1 seul ;
- la figure 3 est une vue en perspective qui représente un porte-moule de la figure 1 munie d'une fiche réalisée selon les enseignements de l'invention ;
- la figure 4 est une vue en perspective qui représente le moule raccordé avec la fiche et une pince de remplacement automatisé du moule ;
- les figures 5 à 14 sont des figures similaires à celles de la figure 4 qui représente les différentes étapes de remplacement d'un moule par la pince, incluant des étapes de déconnexion de la fiche et des étapes de connexion de la fiche ;
- la figure 15 est une vue en perspective qui représente une variante de réalisation dans laquelle la fiche est serrée manuellement contre le moule.

Dans la suite de la description, des éléments présentant une structure identique ou des fonctions analogues seront désignés par des mêmes numéros de référence.

Dans la suite de la description, on adoptera à titre non limitatif un repère local associé à chaque porte-moule 20, 22, chaque repère comportant des orientations :
- longitudinale qui est indiquée par la flèche "L" dirigée d'arrière en avant ;
- verticale qui est indiquée par la flèche "V" dirigée de bas en haut ;
- et transversale qui est indiquée par la flèche "T" dirigée de gauche à droite.

Les lettres du repère relatif au premier porte-moule 20 seront suivies de l'indice "1" tandis que les lettres du repère relatif au deuxième porte-moule 22 seront suivies de l'indice "2".

On définit aussi un plan horizontal qui est orthogonal à la direction verticale, la direction verticale étant commune aux deux porte-moules 20, 22.

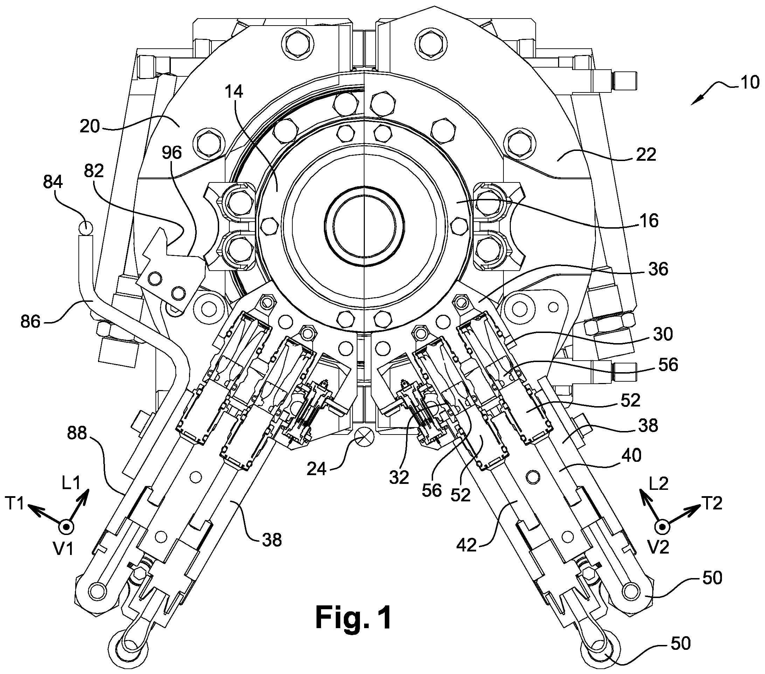

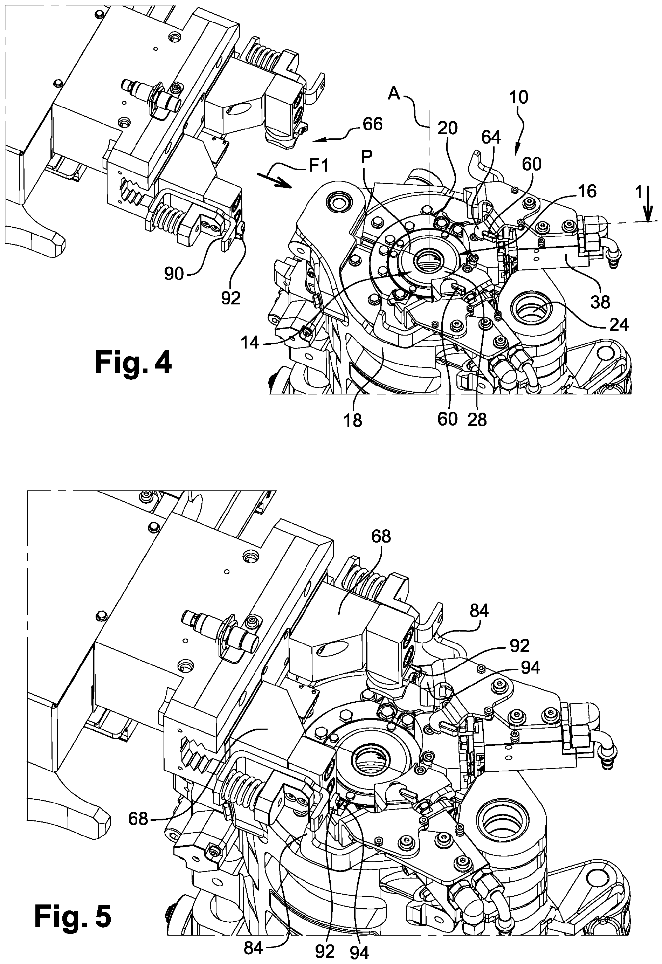

Sur les figures 1 et 4 est représenté un dispositif 10 de fabrication de récipients. Ce dispositif 10 comprend un moule 12 comportant deux demi-moules 14, 16 sensiblement symétriques réalisés dans un matériau métallique (généralement en acier ou dans un alliage d'aluminium). Les deux demi-moules 14, 16 sont susceptibles d'occuper une position assemblée selon un plan "P" de joint vertical. Les deux demi-moules 14, 16 assemblés définissent ensemble une paroi 18 extérieure globalement cylindrique de révolution autour d'un axe "A" principal vertical et ils délimitent sur une face interne une cavité (non représentée) destinée à conférer sa forme à un récipient réalisé par soufflage ou étirage soufflage, dans la cavité, d'une ébauche en matière plastique préalablement chauffée à une température supérieure à sa température de transition vitreuse.

Chaque demi-moule 14, 16 est fixé de manière amovible sur un porte-moule 20, 22 associé. Chaque demi-moule 14, 16 est destiné à être reçu dans un logement associé du porte-moule 20, 22 associé selon une direction de montage horizontale orthogonale au plan "P" de joint du moule 12. La direction de montage forme ici un angle de 45° avec la direction longitudinale "L1", "L2" de chaque porte-moule 20, 22.

Les porte-moules 20, 22 sont articulés le long d'une charnière 24 verticale qui est agencée dans le même plan que le plan "P" de joint vertical du moule 12 entre une position fermée, comme illustrée à la figure 4, dans laquelle le moule 12 est assemblé, et une position ouverte, non représentée, dans laquelle les deux demi-moules 14, 16 sont écartés pour permettre l'introduction de l'ébauche ou le retrait d'un récipient fini. Un fond de moule (non représenté) vient s'intercaler entre les deux demi-moules 14, 16 pour former le fond du récipient.

La structure générale d'un tel moule 12, dénommé moule portefeuille, est décrite dans la demande de brevet français FR-A-2.856.333 et dans la demande internationale correspondante WO-A-05/002820, toutes deux au nom de la demanderesse, auxquelles l'homme du métier pourra se référer.

À une extrémité supérieure 26, correspondant à un col du récipient à former, le moule 12 comprend une platine 28, formée de deux parties symétriques montées chacune sur un demi-moule 14, 16, platine 28 dont une face supérieure forme une face d'appui pour une tuyère (non représentée) d'amenée d'air sous pression grâce auquel est réalisé le soufflage du récipient.

Les porte-moule 20, 22 sont configurés de manière à réserver un accès à la platine 28 supérieure du moule 12.

Les deux demi-moules 14, 16 et les porte-moules 20, 22 présentant une structure identique, seul l'un des demi-moules 16 et le porte-moule 22 associé seront décrits par la suite, la description étant applicable par symétrie à l'autre demi-moule 14 et au porte-moule 20 associé.

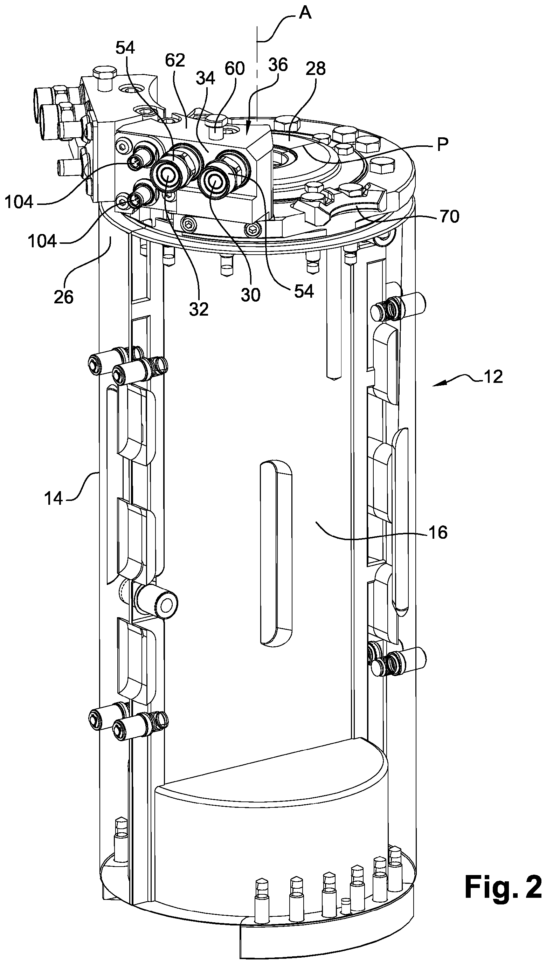

Comme illustré sur la figure 2, la paroi 18 cylindrique extérieure du demi-moule 16 comprend, du côté de son extrémité supérieure 26, une canalisation (non représentée) pour permettre la circulation dans la paroi 18 d'un fluide caloporteur destiné à assurer le refroidissement (ou la chauffe) de la paroi 18.

La canalisation débouche à l'extérieur du demi-moule 16 longitudinalement vers l'arrière en un orifice 30 d'entrée, par lequel est amené le fluide caloporteur, et en un orifice 32 de sortie, par lequel est évacué le fluide caloporteur après avoir effectué un échange thermique avec la paroi 18. Les deux orifices 30, 32 sont agencés sur un même plan transversal vertical.

Comme cela est représenté sur la figure 2, les orifices 30, 32 sont voisins. Ils sont formés chacun par un perçage réalisé dans une face 34 arrière verticale transversale plane d'un boîtier 36. Le boîtier 36 est fixé sur l'extrémité longitudinale de la platine 28 de manière à être agencé verticalement en saillie au-dessus de la platine 28, du côté de la charnière 24.

Le dispositif 10 comprend en outre deux fiches 38 dont chacune est associée à un demi-moule 14, 16. Les deux fiches 38 étant identiques par symétrie par rapport au plan "P" de joint, seule une fiche 38 sera décrite par la suite, la structure et l'agencement de la fiche 38 étant applicable par symétrie à l'autre fiche 38.

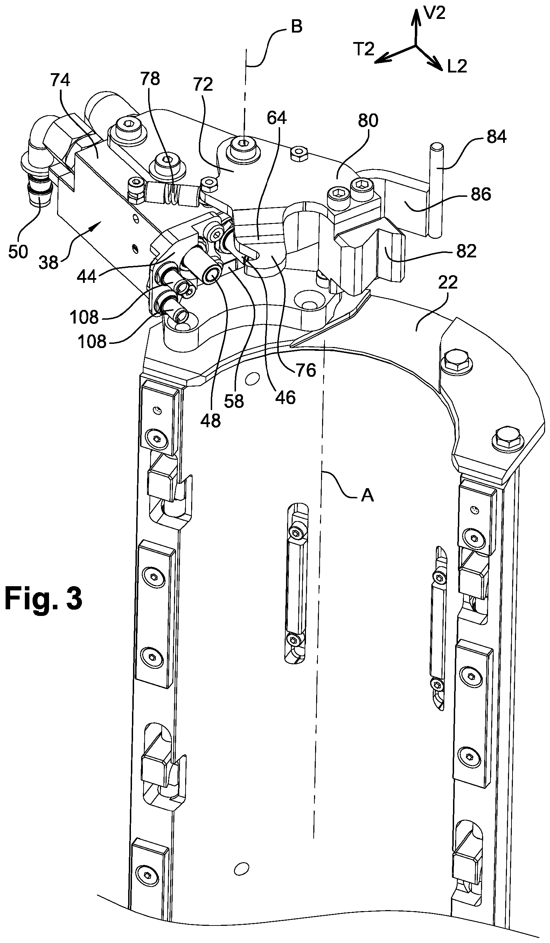

Comme illustré à la figure 3, la fiche 38 se présente sous la forme d'un boîtier dans lequel sont formés un conduit 40 longitudinal d'amenée du fluide caloporteur, et un conduit 42 longitudinal d'évacuation du fluide caloporteur. Les conduits 40, 42 présentent des sections principales 23 sensiblement parallèles, qui débouchent longitudinalement sur une face avant 44 de la fiche 38 en deux ouvertures 46, 48 dont l'entraxe est égal à celui des orifices 30, 32.

A l'opposé de la face avant 44, les conduits 40, 42 sont raccordés à des embouts 50 sur lesquels sont montées des tubulures flexibles (non représentées), respectivement d'amenée et d'évacuation 30 du fluide caloporteur.

Comme représenté à la figure 1, la fiche 38 comprend un système d'obturation de chaque conduit 40, 42, qui comprend une soupape 52 cylindrique montée sur une tige qui s'étend coaxialement au conduit 40, 42. La soupape 52 présente une portée tronconique apte à venir s'appliquer contre un siège de soupape tronconique complémentaire, formé dans le conduit 40, 42. La soupape 52 est montée coulissante sur la tige entre une position d'obturation (non représentée), dans laquelle sa portée est en appui contre le siège de soupape, empêchant ainsi la circulation du fluide, et une position d'ouverture (figure 1) dans laquelle la soupape est écartée du siège, permettant ainsi la circulation du fluide. La soupape 52 est sollicitée en permanence par un ressort de rappel.

Chaque demi-moule 14, 16 est muni d'une paire d'embouts 54 d'accouplement fluidique, introduits chacun dans un orifice 30, 32 de la canalisation. Chaque embout 54, une fois monté, s'étend en saillie par rapport à la face 34 arrière du boîtier 36. L'embout 54 est percé d'un alésage traversant qui s'étend depuis une extrémité libre de l'embout où il présente un épaulement tronconique formant un siège de clapet, jusqu'à une extrémité opposée du corps où l'alésage débouche dans la canalisation. Un clapet 56 est monté coulissant dans l'alésage entre une position d'obturation (non représentée) dans laquelle le clapet 56 empêche le passage du fluide caloporteur au travers de l'alésage, et une position d'ouverture (figure 1) dans laquelle le clapet 56 permet le passage du fluide caloporteur au travers de l'alésage. Le clapet 56 est sollicité en permanence par un ressort de rappel vers sa position d'obturation.

Les soupapes 52 et les clapets 56 sont commandés vers leur position d'ouverture lorsque la fiche 38 est emboîtée avec les embouts 54 du demi-moule 16. Ils reprennent leur position d'obturation lors du déboîtement de la fiche par rapport au demi-moule 16.

Pour une description plus détaillée de tels moyens d'obturation, on pourra se reporter au document FR-A-2.903.932.

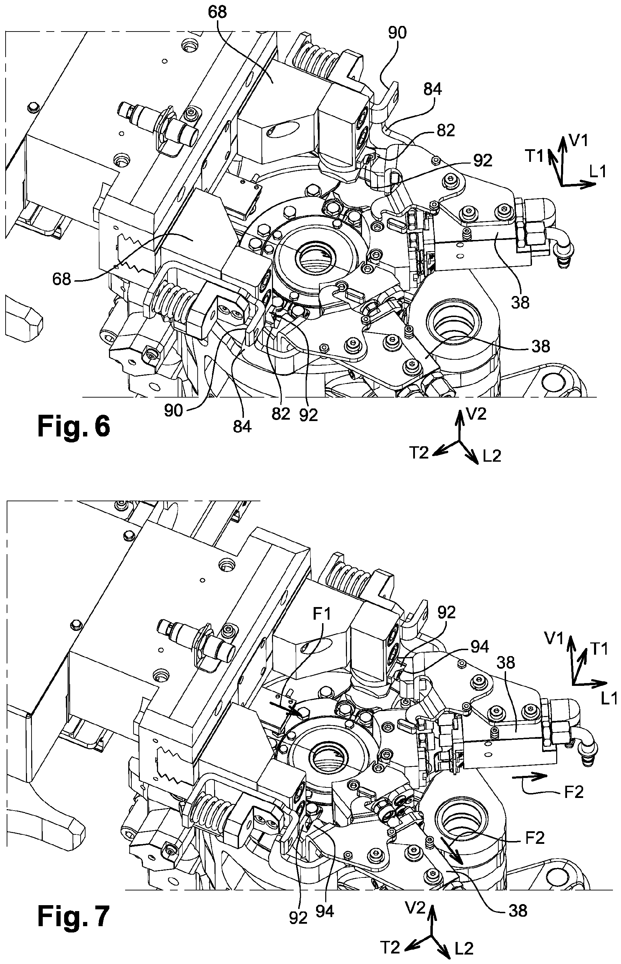

Comme illustré à la figure 3, la fiche 38 est montée coulissante longitudinalement sur un rail 58 longitudinal qui est fixé au porte-moule 20, 22 en vis-à-vis des orifices 30, 32 du demi-moule 14, 16. Le rail 58 s'étend ainsi longitudinalement vers l'arrière dans une direction opposée à l'axe vertical "A". La fiche 38 est ainsi coulissante sur le porte-moule 20, 22 entre :
- une position extrême avant de connexion dans laquelle la fiche 38 est emboîtée longitudinalement avec les embouts 54 des orifices 30, 32 d'entrée et de sortie du demi-moule 16, comme illustré par exemple à la figure 4,
- et une position arrière de déconnexion dans laquelle la fiche 38 est déboîtée des embouts 54 des orifices 30, 32 d'entrée et de sortie du demi-moule 16, comme illustré par exemple à la figure 7.

Dans sa position extrême avant de connexion, le conduit 40 d'amenée et le conduit 42 d'évacuation sont raccordés simultanément avec l'orifice 30 d'entrée et l'orifice 32 de sortie, respectivement, du demi-moule 16 monté dans le porte-moule 22. Le raccordement est réalisé simultanément et de manière étanche entre le conduit 40 d'amenée et l'orifice 30 d'entrée d'une part, et entre le conduit 42 d'évacuation et l'orifice 32 de sortie d'autre part. Comme cela est illustré sur la figure 1, l'embout 54 vient repousser la soupape 52 vers sa position d'ouverture à l'encontre de son ressort de rappel, tandis que la tige repousse le clapet 56 vers sa position d'ouverture à l'encontre de son ressort de rappel. Dans cette configuration ouverte, le fluide peut librement circuler du conduit 40 d'amenée vers la canalisation puis vers le conduit 42 d'évacuation en transitant par chaque alésage.

Pour interrompre le raccordement entre la fiche 38 et le demi-moule 14, 16 associé, il suffit de faire coulisser la fiche 38 longitudinalement vers l'arrière dans sa position extrême arrière de déconnexion, comme illustré par exemple à la figure 7. Le demi-moule 14, 16 étant fixé sur son porte-moule 20, 22, seule la fiche 38 recule. Les soupapes 52 et les clapets 56 sont rappelés élastiquement dans leur position d'obturation pour éviter que le fluide caloporteur ne s'écoule hors de son circuit.

On a observé que lorsque la fiche 38 n'était pas correctement emboîtée avec les embouts du demi-moule 14, 16, c'est-à-dire lorsque la fiche 38 n'est pas poussée vers l'avant jusqu'à sa position extrême avant de connexion, les soupapes 52 et les clapets 56 ne sont que partiellement ouverts, ce qui limite le débit de fluide caloporteur. De ce fait, la température du moule 12 ne peut plus être régulée de manière efficace.

L'invention propose un dispositif 10 qui comporte des moyens de serrage de la fiche 38 contre le moule 12 en position de connexion pour assurer que les soupapes 52 et les clapets soient complètement ouverts. Ces moyens de serrage maintiennent la fiche 38 serrée en permanence contre le moule 12 dans sa position extrême avant de connexion ce qui permet ainsi la fixation amovible de la fiche 38 sur le moule 12.

Comme illustré notamment aux figures 3 et 4, les moyens de serrage comportent un mentonnet 60 qui est porté fixe par le demi-moule 16 en avant de la fiche 38 lorsque le demi-moule 16 est monté sur le porte-moule 22. Comme illustré aux figures, le mentonnet 60 est ici formé par une protubérance qui s'étend verticalement en saillie depuis une face 62 supérieure du boîtier 36 de moule 12. La protubérance présente ici une section horizontale allongée suivant une direction parallèle au plan "P" de joint.

Les moyens de serrage comportent aussi un doigt 64 de serrage qui est porté de manière mobile par la fiche 38 entre une position de serrage dans laquelle le doigt 64 est accroché derrière le mentonnet 60 de manière à serrer longitudinalement la fiche 38 contre le moule 12, et une position de libération dans laquelle le doigt 64 est décalé par rapport au mentonnet 60 pour permettre le coulissement de la fiche 38 vers sa position arrière de déconnexion, comme représenté à la figure 7.

De manière générale, le doigt 64 de serrage est susceptible d'être accroché derrière le mentonnet 60 lorsque la fiche 38 occupe une position comprise entre sa position extrême avant de connexion et une position d'accrochage qui est intermédiaire entre sa position extrême arrière et sa position extrême avant. Par exemple, comme illustré à la figure 6, en position d'accrochage, l'extrémité libre des embouts 54 est à peine enfoncée dans les conduits 40, 42 de la fiche 38. Ceci permet de garantir que la fiche 38 sera tirée jusqu'à sa position extrême avant par le doigt 64 de serrage même si elle n'est pas complètement emboîtée avec les embouts 54 du demi-moule 14, 16.

On a représenté un premier mode de réalisation de l'invention aux figures 1 à 14. Ce mode de réalisation permet un remplacement des moules 12 par des moyens automatisés.

Les moyens automatisés comportent une pince 66 de préhension qui est équipée de deux mors 68 mobiles orthogonalement au plan "P" de joint du moule 12 entre une position écartée, comme illustré aux figures 6, 7, 8, 12 et 13, et une position de préhension d'une partie 70 supérieure de préhension du moule 12 dans laquelle les mors 68 sont rapprochés l'un de l'autre, comme illustrée aux figures 4, 5, 9, 10, 11 et 14. La partie 70 de préhension du moule 12 est agencée à proximité immédiate de la platine 28 supérieure.

La pince 66 permet ainsi de maintenir le moule 12 dans sa position assemblée lorsqu'il n'est plus fixé sur les porte-moule 20, 22 et également de porter le moule 12 pour éviter qu'il ne tombe lorsque de son démontage des porte-moules 20, 22.

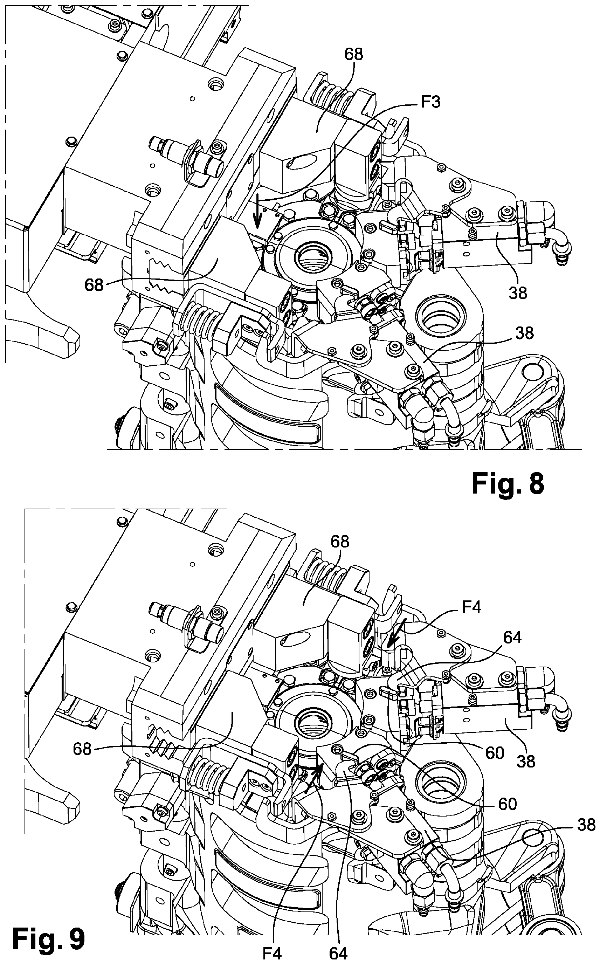

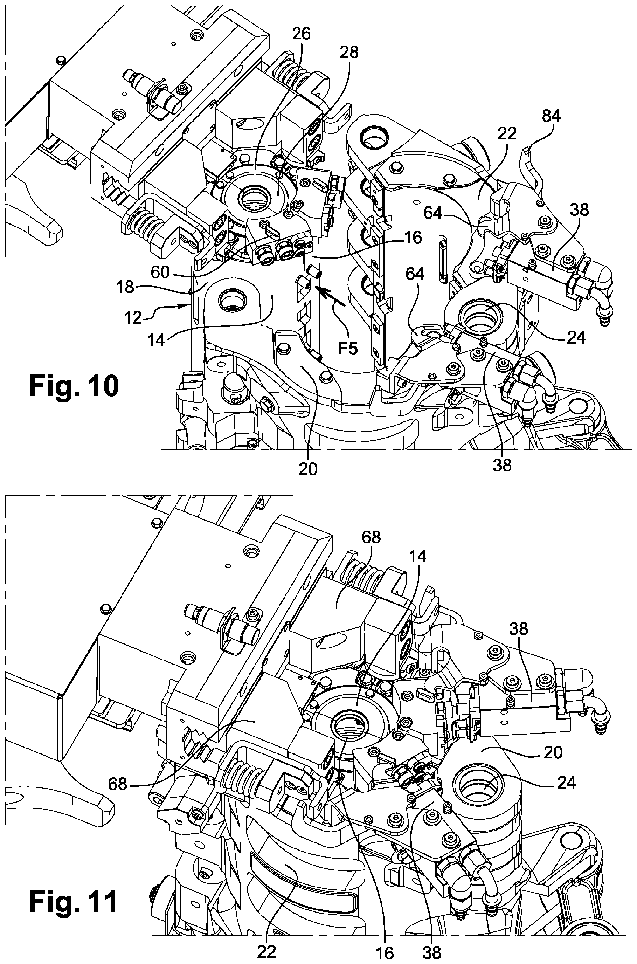

Pour permettre un démontage facile du moule 12 assemblé, la pince 66 est mobile selon une direction horizontale parallèle au plan "P" de joint entre une position avant de préhension, comme représenté à la figure 9, et une position arrière de retrait du moule 12, comme représenté à la figure 10.

En outre lorsque la pince 66 est dans sa position avant de préhension, elle est susceptible d'être animée d'un mouvement vertical entre une position supérieure de préhension dans laquelle est agencée au-dessus du moule 12, comme représenté à la figure 7, et une position inférieure de préhension dans laquelle la partie 70 de préhension du moule 12 est agencée entre les deux mors 68, comme illustré à la figure 8. Ce mouvement vertical permet de franchir les bords d'extrémité supérieure des porte-moules 20, 22 qui interdisent l'accès horizontal de la partie 70 de préhension des moules 12 lorsqu'ils sont en position fermée.

Dans ce premier mode de réalisation le doigt 64 de serrage présente une première extrémité 72 arrière qui est montée pivotant autour d'un axe "B" vertical de pivotement sur la face 74 supérieure du boitier de la fiche 38 entre sa position angulaire extrême de serrage et sa position angulaire extrême de libération. Le pivotement du doigt 64 de serrage entre ses deux positions extrêmes est limité par des butées angulaires (non représentées).

Le doigt 64 présente une extrémité 76 avant libre qui est recourbée en forme de crochet de manière à pouvoir être accrochée derrière le mentonnet 60.

Ainsi, lorsque le doigt 64 de serrage occupe sa position de libération, le doigt 64 est décalé transversalement par rapport au mentonnet 60 de manière à permettre le coulissement longitudinal de la fiche 38 vers sa position arrière de déconnexion dans laquelle l'extrémité 76 libre du doigt 64 de serrage est agencée longitudinalement en arrière du mentonnet 60.

Dans ce premier mode de réalisation, le doigt 64 de serrage est rappelé élastiquement vers sa position de serrage au moyen d'un ressort 78 avec un effort de serrage suffisant pour emboîter complètement la fiche 38 avec les orifices 30, 32 d'entrée et de sortie du moule 12. L'effort de serrage est suffisant pour faire coulisser la fiche 38 jusqu'à sa position extrême avant de connexion à l'encontre de l'effort de rappel élastique des soupapes et des clapets d'obturation vers leur position fermée. Ainsi, bien que la pince 66 soit censée connecter la fiche 38 avec le moule 12, le doigt 64 de serrage garantit la connexion même en cas de dysfonctionnement de la pince 66.

Un bras 80 de levier s'étend ici horizontalement depuis l'extrémité 72 arrière du doigt 64 de serrage. Le bras de levier comporte une face 82 d'actionnement qui est susceptible d'être sollicité par une tête 92 d'actionnement des moyens automatiques pour faire tourner le doigt 64 de serrage vers sa position de libération à l'encontre de l'effort de rappel élastique.

Le bras 80 de levier comporte en outre une face 94 verticale de butée qui s'étend globalement transversalement et qui est tournée vers l'avant. La face 94 de butée est destinée à être poussée par la tête 92 d'actionnement vers l'avant pour commander le coulissement vers l'avant de la fiche 38. Pour éviter que le doigt 64 de serrage ne force sur ses butées angulaires, la face 94 de butée est sensiblement alignée longitudinalement avec l'axe "B" de rotation du doigt 64.

La face 94 de butée forme une cornière avec la face 82 d'actionnement associée de manière que la tête 82 soit bloquée dans l'angle formé entre ces deux faces lors d'une opération de déconnexion.

Le bras 80 de levier et le doigt 64 de serrage sont fixes l'un par rapport à l'autre et ils s'étendent sensiblement dans un même plan horizontal. Ils sont ici formés en une seule pièce. Le doigt 64 de serrage et le bras de levier forment ainsi un levier dans lequel l'axe "B" de pivotement forme un point d'appui qui est interposé entre l'extrémité 76 libre du doigt 64 de serrage et la face 82 d'actionnement.

La face 82 d'actionnement est ici décalée longitudinalement vers l'avant par rapport à l'axe "B" de pivotement du doigt 64 de serrage de manière à pouvoir être sollicité par un effort horizontal d'actionnement qui est dirigé orthogonalement au plan "P" de joint du moule 12. La face d'actionnement 82 s'étend ici longitudinalement et verticalement.

La fiche 38 comporte en outre un ergot 84 vertical de commande en coulissement qui est fixé à la fiche 38. L'ergot 84 de commande est ici agencé à l'extrémité libre d'un bras 86 qui s'étend transversalement dans une direction opposée à celle du plan "P" de joint. Le bras 86 est fixé sur une paroi 88 latérale du boîtier de la fiche 38.

L'ergot 84 est susceptible d'être tiré longitudinalement en avant par une face 90 verticale de tirage des moyens automatisés pour permettre le retour de la fiche 38 vers sa position avant de connexion. Dans les faits, les moyens de connexion exercent un effort de tirage sur l'ergot 84 vers l'avant selon une direction qui est parallèle au plan "P" de joint du moule 12. L'effort de tirage comporte ainsi une composante longitudinale qui permet le déplacement effectif de la fiche 38 vers sa position avant de connexion, et une composante transversale. Du fait de la présence de la composante transversale, l'appui entre les moyens automatisés et l'ergot 84 et réalisé de manière glissante selon la direction transversale.

Les ergots 84 s'étendent sur une hauteur verticale suffisante pour que les faces 90 de tirage soient susceptibles d'entrer en contact avec eux aussi bien en position de préhension supérieure de la pince 66 qu'en position de préhension inférieure.

Pour pouvoir commander la position de la fiche 38 et la position du doigt 64 de serrage, chaque mors 68 de la pince 66 porte de manière fixe une tête 92 d'actionnement et une face 90 de tirage. Ainsi, chaque mors 68 est susceptible de commander la connexion ou la déconnexion d'une fiche 38 associée.

La face 90 de tirage est portée par une cornière qui est fixé sur une face latérale externe de chaque mors 68, c'est-à-dire la face qui est opposée à l'autre mors 68. La face 90 de tirage s'étend ainsi orthogonalement au plan "P" de joint en saillie par rapport au mors 68.

La tête 92 d'actionnement est agencée à une extrémité avant de chaque mors 68. Elle est destinée à solliciter la face 82 d'actionnement.

Les faces 82 d'actionnement s'étendent sur une hauteur verticale suffisante pour que les têtes 92 d'actionnement soient susceptibles d'entrer en contact avec elles aussi bien en position de préhension supérieure de la pince 66 qu'en position de préhension inférieure.

On décrit à présent un procédé de remplacement d'un moule 12 par les moyens automatisés en référence aux figures 4 à 14.

Comme illustré aux figures 4 et 5, lorsque le moule 12 est en position jointe, la pince 66 des moyens automatisés avance horizontalement, selon la direction indiquée par la flèche "F1" de la figure 4, jusqu'à une position supérieure d'actionnement dans laquelle la tête 92 d'actionnement est à proximité ou contre la face 94 de butée mais sans appliquer de force. Les mors 68 sont dans leur position de préhension. La pince 66 occupe alors sa position supérieure.

Les mors 68 étant rapprochés l'un de l'autre, les faces 90 de tirage passent entre les deux ergots 84, tandis que les têtes 92 d'actionnement sont agencées transversalement entre les deux faces 82 d'actionnement associés.

Les mors 68 de la pince 66 sont alors commandés vers leur position écartée, comme illustré à la figure 6. La face 90 de tirage de chaque mors 68 est alors agencée longitudinalement en arrière et en vis-à-vis des ergots 84 associés, tandis que la tête 92 d'actionnement de chaque mors 68 sollicite les doigts 64 de serrage vers leur position de libération par appui contre la face 82 d'actionnement.

Puis la pince 66, dans sa position écartée, avance jusqu'à sa position supérieure de préhension qui est représentée à la figure 7 selon la direction indiquée par la flèche "F1". Ce faisant, les têtes 92 d'actionnement poussent les fiches 38 vers leur position extrême arrière de déconnexion comme indiqué par les flèches "F2" en appuyant sur les faces 94 de butée de chaque fiche 38.

La pince 66 est ensuite abaissée par coulissement vertical vers sa position inférieure de préhension, comme illustré par la flèche "F3" à la figure 8. La pince 66 est alors refermée dans sa position de préhension, comme cela est illustré par les flèches "F4" à la figure 9. Le dispositif de fixation amovible des demi-moule 14, 16 est commandé de manière à désolidariser le moule 12 des porte-moules 20, 22.

Les doigts 64 sont alors rappelés élastiquement vers leur position de serrage. Les fiches 38 étant dans leur position arrière de déconnexion, les doigts 64 de serrage sont agencés en avant du mentonnet 60 associé. Le porte-moule 20, 22 peut donc être ouvert sans que les mentonnets 60 ne soient accrochés par les doigts 64, comme représenté à la figure 10.

Les porte-moules 20, 22 sont ouverts. La pince 66 retire alors le moule 12 dans un mouvement de retrait indiqué par la flèche "F5". La pince 66 occupant sa position de préhension et les porte-moules 20, 22 étant dans leur position ouverte, les faces de tirage passent de nouveau entre les deux ergots 84, laissant ainsi les fiches 38 dans leur position arrière de déconnexion.

Puis, un moule 12 de remplacement est apporté par la pince 66 ou par une autre pince 66 identique. Les porte-moules 20, 22 sont refermés sur le moule 12 de remplacement et les moyens de fixation amovibles sont commandés de manière à fixer chaque demi-moule 14, 16 avec le porte-moule 20, 22 associé, comme représenté à la figure 11.

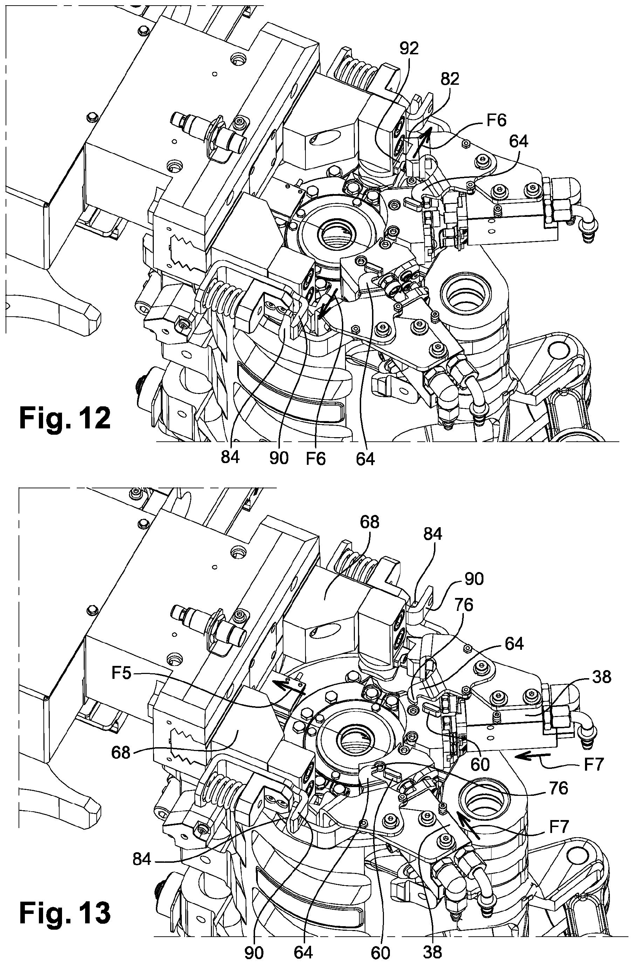

La pince 66 est alors commandée vers sa position écartée, comme illustré par les flèches "F6" à la figure 12. Ainsi, les têtes 92 d'actionnement sollicitent à nouveau les doigts 64 de serrage vers leur position de libération, tandis que les faces 90 de tirage sont agencées longitudinalement en arrière et en vis-à-vis des ergots 84.

La pince 66 est déplacée, toujours dans sa position écartée, vers sa position supérieure de préhension, puis elle est retirée vers sa position initiale comme indiquée par la flèche "F5" de la figure 13. En avançant, la face 90 de tirage de chaque pince 66 tire longitudinalement vers l'avant chaque ergot 84, ce qui entraîne le déplacement de la fiche 38 vers sa position avant de connexion, comme représenté par les flèches "F7" à la figure 13. L'extrémité 76 crochue des doigts 64 de serrage est alors agencée en avant des mentonnets 60.

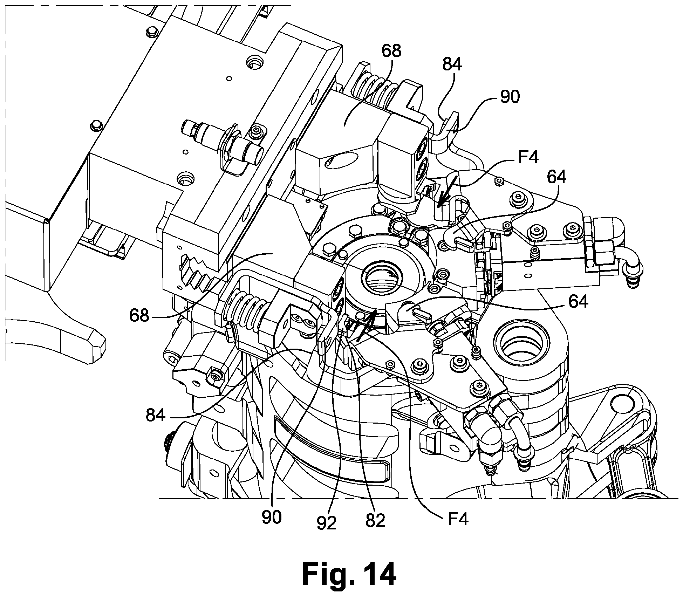

La pince 66 est ensuite commandée vers sa position de préhension, comme indiqué par les flèches "F4" de la figure 14, de manière à dégager les faces 90 de tirage des ergots 84. Ce faisant, les têtes 92 d'actionnement cessent de solliciter les doigts 64 de serrage. Ces derniers sont alors rappelés élastiquement vers leur position de serrage, comme illustré à la figure 14.

La fiche 38 étant dans sa position extrême avant de connexion ou tout au moins à proximité de sa position extrême avant de connexion, les doigts 64 de serrage accrochent les mentonnets 60 et serrent la fiche 38 longitudinalement contre le moule 12, assurant ainsi que la fiche 38 occupe sa position extrême avant de connexion.

La pince 66 peut alors être retirée horizontalement sans tirer les ergots 84.

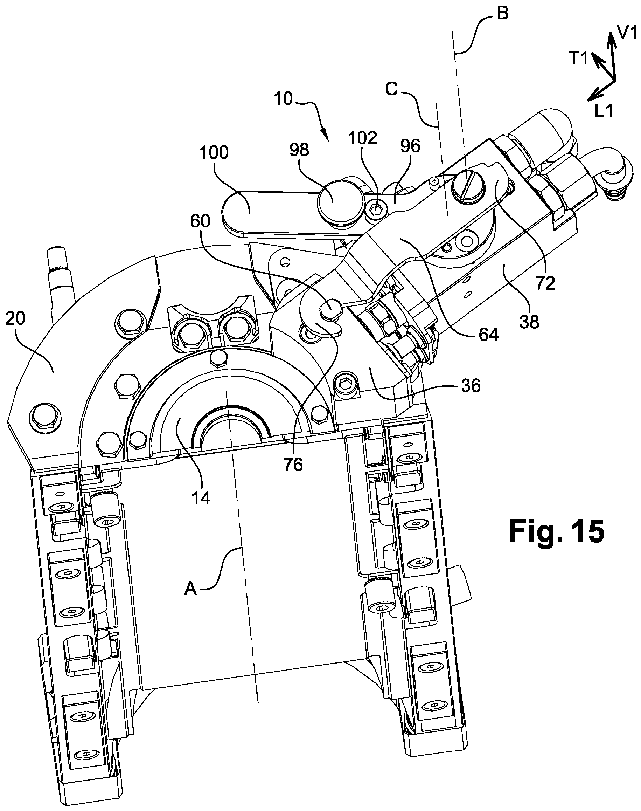

Un deuxième mode de réalisation de l'invention a été représenté à la figure 15. Ce mode de réalisation est ici destiné à être actionné manuellement par un opérateur.

Le dispositif 10 de fabrication est similaire à celui du premier mode de réalisation. Seules les différences avec le premier mode de réalisation seront décrites par la suite.

Dans ce dispositif 10, la fiche 38 ne comporte pas d'ergot 84. On pourra cependant prévoir une poignée pour que l'opérateur puisse faire coulisser plus facilement la fiche 38 vers sa position extrême arrière.

Dans ce deuxième mode de réalisation, le doigt 64 de serrage n'est pas rappelé élastiquement vers sa position de serrage. En revanche, le doigt 64 de serrage est susceptible d'être actionné et maintenu en position par un mécanisme de genouillère qui est porté par la fiche 38.

Une manivelle 96 est montée tournante sur la face supérieure de la fiche 38 autour d'un axe "C" vertical de rotation. Un bouton 98 de manipulation de la manivelle est agencé sur un bras 100 radial de la manivelle 96. L'extrémité 72 arrière du doigt 64 de serrage est montée pivotante sur une face supérieure de la manivelle 96 autour d'un axe "B" de pivotement. L'axe "B" de pivotement du doigt 64 est monté à proximité de l'axe "C" de rotation, mais de manière décalée radialement par rapport à ce dernier.

La manivelle 96 comporte en outre un pion 102 qui s'étend verticalement depuis la face supérieure de la manivelle 96 à proximité de son axe "C" de rotation de manière que le pion 102 soit susceptible de venir en contact avec un bord du doigt 64 de serrage lors de la rotation de la manivelle 96.

Lorsque le doigt 64 occupe sa position de serrage, son axe "B" de pivotement est agencé longitudinalement en arrière de l'axe "C" de rotation de la manivelle 96, comme cela est représenté à la figure 15. L'axe "B" de pivotement est légèrement décalé transversalement de manière à être en butée contre le pion 102. Cette position permet de conférer une stabilité à la position de serrage sans possibilité de desserrage du doigt 64. Le pion 102 est alors agencé longitudinalement entre l'axe "B" de pivotement et l'axe "C" de rotation.

Lorsqu'un opérateur veut commander le doigt 64 de serrage vers sa position de libération, il fait tourner la manivelle de manière à faire passer le pion 102 longitudinalement en arrière de l'axe "B" de pivotement. Le pion 102 pousse alors le doigt 64 de serrage de manière à le faire pivoter vers sa position de libération, aidé en ceci par la rotation de l'axe "B" de pivotement autour de l'axe "C" de rotation de la manivelle 96.

Selon une variante de l'invention qui est applicable à l'un quelconque des modes de réalisation, le doigt de serrage est commandé dans sa position de serrage par un mécanisme à came.

Dans les modes de réalisation représentés aux figures, le moule 12 comporte une instrumentation, telle qu'une sonde de température, nécessitant une alimentation électrique. A cet effet, le moule 12 est équipé de premiers connecteurs 104 électriques sous forme de manchons métalliques emmanchés dans deux perçages réalisés dans la face 34 avant du boîtier 36 de chaque demi-moule 14, 16, comme cela est par exemple représenté à la figure 2. Les premiers connecteurs 104 sont agencés au voisinage immédiat des embouts 54.

Comme l'alimentation fluidique, l'alimentation électrique du moule 12 est réalisée via la fiche 38, laquelle est munie de deuxièmes connecteurs 108 électriques qui, lorsque la fiche 38 est accouplée au moule 12, viennent s'emboîter dans les premiers connecteurs 104 complémentaires.

Chaque deuxième connecteur 108 est relié à un câble électrique (non représenté) qui assure la liaison avec un générateur électrique externe au dispositif 10.

Le dispositif 10 réalisé selon les enseignements de l'invention permet de garantir un emboîtement complet de la fiche 38 sur le moule 12. Les moyens de serrage permettent en outre de fixer de manière amovible la fiche 38 sur le moule 12.

En outre, les moyens de serrage réalisés selon le premier mode de réalisation de l'invention permettent de réaliser un remplacement entièrement automatique du moule 12.

## Revendications

1. Dispositif (10) de fabrication de récipients par soufflage, le dispositif (10) comportant :
- un moule (12) qui comporte une paroi définissant une cavité de moulage d'axe (A) vertical, le moule (12) étant muni d'au moins une canalisation pour la circulation d'un fluide caloporteur, cette canalisation présentant sur une face externe (34) du moule (12) un orifice (30) d'entrée du fluide caloporteur et un orifice (32) de sortie du fluide caloporteur ;
- un porte-moule (20, 22) dans lequel le moule (12) est monté de manière amovible ;
- une fiche (38) munie d'un conduit (40) d'amenée du fluide caloporteur et d'un conduit (42) d'évacuation du fluide caloporteur, la fiche (38) étant montée coulissante longitudinalement sur le porte-moule (20, 22) entre une position extrême avant de connexion dans laquelle la fiche (38) est emboîtée avec les orifices (30, 32) d'entrée et de sortie du moule (12) et dans laquelle le conduit (40) d'amenée et le conduit (42) d'évacuation sont raccordés simultanément avec l'orifice (30, 32) d'entrée et l'orifice de sortie, respectivement, et une position extrême arrière de déconnexion dans laquelle la fiche (38) est déboîtée des orifices (30, 32) d'entrée et de sortie ;
**caractérisé en ce qu'**il comporte des moyens de serrage de la fiche (38) contre le moule (12) en position de connexion, les moyens de serrage permettant la fixation amovible de la fiche (38) sur le moule (12) en position extrême avant de connexion et comportant :
- un mentonnet (60) qui est porté fixe par le moule (12) en avant de la fiche (38) lorsque le moule (12) est monté sur le porte-moule (20, 22) ; et
- un doigt (64) de serrage qui est porté de manière mobile sur la fiche (38) entre une position de serrage dans laquelle le doigt (64) est accroché derrière le mentonnet (60) de manière à serrer longitudinalement la fiche (38) contre le moule (12), et une position de libération dans laquelle le doigt (64) est décalé par rapport au mentonnet (60) pour permettre le coulissement de la fiche (38) vers sa position arrière de déconnexion ;
et **en ce que** le doigt (64) de serrage est susceptible d'être accroché derrière le mentonnet (60) lorsque la fiche (38) occupe une position comprise entre la position extrême avant de connexion et une position d'accrochage qui est intermédiaire entre la position extrême arrière de déconnexion et la position extrême avant de connexion, les moyens de serrage étant agencés de manière à ce que le doigt (64) de serrage tire la fiche (38) jusqu'à la position extrême avant de connexion même si la fiche (38) n'est pas complètement emboîtée avec les embouts (54) du demi-moule (14,16).

2. Dispositif (10) selon la revendication précédente, **caractérisé en ce qu'**en position de libération, le doigt (64) est décalé transversalement par rapport au mentonnet (60).

3. Dispositif (10) selon la revendication précédente, **caractérisé en ce que** le doigt (64) est monté pivotant autour d'un axe (B) vertical sur la fiche.

4. Dispositif (10) selon l'une quelconque des revendications précédentes, **caractérisé en ce que** le doigt (64) est rappelé élastiquement vers sa position de serrage avec un effort de serrage suffisant pour emboîter complètement la fiche (38) avec les orifices (30, 32) d'entrée et de sortie du moule (12).

5. Dispositif (10) selon la revendication précédente, **caractérisé en ce que** le doigt (64) est fixé avec un bras (80) de levier qui permet de commander le doigt (64) de serrage vers sa position de libération lorsque l'extrémité (82) du bras (80) de levier est sollicitée transversalement.

6. Dispositif (10) selon la revendication précédente, **caractérisé en ce que** la fiche (38) comporte un ergot (84) de commande en coulissement qui est porté fixe par la fiche (38).

7. Dispositif (10) selon l'une quelconque des revendications 1 à 3, **caractérisé en ce que** le doigt (64) de serrage est maintenu en position par un mécanisme à genouillère qui est porté par la fiche (38).

8. Dispositif (10) selon l'une quelconque des revendications 1 à 3, **caractérisé en ce que** le doigt (64) de serrage est commandé dans sa position de serrage par un mécanisme à came.

9. Dispositif (10) selon l'une quelconque des revendications précédentes, **caractérisé en ce que** le moule (12) et la fiche (38) sont munis de moyens de raccordement électrique comportant au moins un premier connecteur (104) porté par le moule et un deuxième connecteur (108) complémentaire porté par la fiche (38), le premier connecteur (104) et le deuxième connecteur (108) étant susceptibles d'être emboîtés longitudinalement.

## Patentansprüche

1. Vorrichtung (10) zur Herstellung von Behältern durch Blasen, wobei die Vorrichtung (10) aufweist:
- eine Form (12), die eine einen Formhohlraum mit senkrechter Achse (A) definierende Wand aufweist, wobei die Form (12) mit mindestens einer Rohrleitung für den Umlauf eines Wärmeträgerfluids ausgestattet ist, wobei diese Rohrleitung auf einer Außenseite (34) der Form (12) eine Eintrittsöffnung (30) des Wärmeträgerfluids und eine Austrittsöffnung (32) des Wärmeträgerfluids aufweist;
- einen Formträger (20, 22), in den die Form (12) entfernbar montiert ist;
- einen Stecker (38) versehen mit einem Zufuhrkanal (40) des Wärmeträgerfluids und einem Abfuhrkanal (42) des Wärmeträgerfluids, wobei der Stecker (38) zwischen einer vorderen Verbindungsendstellung, in der der Stecker (38) mit den Eintritts- und Austrittsöffnungen (30, 32) der Form (12) zusammengesteckt ist und in der der Zufuhrkanal (40) und der Abfuhrkanal (42) gleichzeitig an die Eintrittsöffnung (30) bzw. Austrittsöffnung (32) angeschlossen sind, und einer hinteren Trennendstellung längs gleitend auf den Formträger (20, 22) montiert ist, in der der Stecker (38) von den Eintritts- und Austrittsöffnungen (30, 32) abgezogen ist;
**dadurch gekennzeichnet, dass** sie Klemmeinrichtungen des Steckers (38) gegen die Form (12) in der Verbindungstellung aufweist, wobei die Klemmeinrichtungen die lösbare Befestigung des Steckers (38) auf der Form (12) in der vorderen Verbindungsendstellung erlauben, und die aufweisen:
- einen Klinkhaken (60), der von der Form (12) ortsfest vor dem Stecker (38) getragen wird, wenn die Form (12) auf den Formträger (20, 22) montiert ist; und
- einen Klemmfinger (64), der zwischen einer Klemmstellung, in der der Finger (64) hinter dem Klinkhaken (60) eingehakt ist, um den Stecker (38) in Längsrichtung gegen die Form (12) zu klemmen, und einer Freigabestellung beweglich auf dem Stecker (38) getragen wird, in der der Finger (64) bezüglich des Klinkhakens (60) verschoben ist, um das Gleiten des Steckers (38) in seine hintere Trennstellung zu erlauben;
und dass der Klemmfinger (64) hinter dem Klinkhaken (60) eingehakt werden kann, wenn der Stecker (38) eine Stellung einnimmt, die zwischen der vorderen Verbindungsendstellung und einer Einhakstellung liegt, die zwischen der hinteren Trennendstellung und der vorderen Verbindungsendstellung liegt, wobei die Klemmeinrichtungen so eingerichtet sind, dass der Klemmfinger (64) den Stecker (38) bis in die vordere Verbindungsendstellung zieht, selbst wenn der Stecker (38) nicht vollständig mit den Anschlusstücken (54) der Halbform (14, 16) zusammengesteckt ist.

2. Vorrichtung (10) nach dem vorhergehenden Anspruch, **dadurch gekennzeichnet, dass** der Finger (64) in der Freigabestellung bezüglich des Klinkhakens (60) quer verschoben ist.

3. Vorrichtung (10) nach dem vorhergehenden Anspruch, **dadurch gekennzeichnet, dass** der Finger (64) um eine senkrechte Achse (B) auf dem Stecker schwenkbar montiert ist.

4. Vorrichtung (10) nach einem der vorhergehenden Ansprüche, **dadurch gekennzeichnet, dass** der Finger (64) mit einer ausreichenden Klemmkraft elastisch in seine Klemmstellung zurückgeholt wird, um den Stecker (38) vollständig mit den Eintritts- und Austrittsöffnungen (30, 32) der Form (12) zusammenzustecken.

5. Vorrichtung (10) nach dem vorhergehenden Anspruch, **dadurch gekennzeichnet, dass** der Finger (64) mit einem Hebelarm (80) befestigt ist, der es ermöglicht, den Klemmfinger (64) in seine Freigabestellung zu steuern, wenn das Ende (82) des Hebelarms (80) quer beaufschlagt wird.

6. Vorrichtung (10) nach dem vorhergehenden Anspruch, **dadurch gekennzeichnet, dass** der Stecker (38) einen Nocken (84) zur Gleitsteuerung aufweist, der ortsfest vom Stecker (38) getragen wird.

7. Vorrichtung (10) nach einem der Ansprüche 1 bis 3, **dadurch gekennzeichnet, dass** der Klemmfinger (64) durch einen Kniehebelmechanismus in Stellung gehalten wird, der vom Stecker (38) getragen wird.

8. Vorrichtung (10) nach einem der Ansprüche 1 bis 3, **dadurch gekennzeichnet, dass** der Klemmfinger (64) durch einen Nockenmechanismus in seine Klemmstellung gesteuert wird.

9. Vorrichtung (10) nach einem der vorhergehenden Ansprüche, **dadurch gekennzeichnet, dass** die Form (12) und der Stecker (38) mit elektrischen Anschlusseinrichtungen versehen sind, die mindestens einen von der Form getragenen ersten Verbinder (104) und einen vom Stecker (38) getragenen komplementären zweiten Verbinder (108) aufweisen, wobei der erste Verbinder (104) und der zweite Verbinder (108) in Längsrichtung zusammengesteckt werden können.

## Claims

1. Device (10) for manufacturing containers by blow-moulding, the device (10) comprising:
- a mould (12) that comprises a wall defining a moulding cavity of vertical axis (A), the mould (12) being provided with at least one pipe for the circulation of a heat-transfer fluid, this pipe having, on an external face (34) of the mould (12), a heat-transfer fluid inlet orifice (30) and a heat-transfer fluid outlet orifice (32);
- a mould carrier (20, 22) in which the mould (12) is removably mounted;
- a plug (38) provided with a heat-transfer fluid supply duct (40) and with a heat-transfer fluid discharge duct (42), the plug (38) being mounted so as to slide longitudinally on the mould carrier (20, 22) between a forwardmost, connection position in which the plug (38) is fitted together with the inlet and outlet orifices (30, 32) of the mould (12) and in which the supply duct (40) and the discharge duct (42) are connected simultaneously to the inlet orifice (30) and the outlet orifice (32), respectively, and a rearmost, disconnection position in which the plug (38) is disengaged from the inlet and outlet orifices (30, 32);
**characterized in that** it comprises means for clamping the plug (38) against the mould (12) in the connection position, the clamping means allowing the plug (38) to be removably attached to the mould (12) in the forwardmost, connection position and comprising:
- a dog (60) that is borne fixedly by the mould (12) in front of the plug (38) when the mould (12) is mounted on the mould carrier (20, 22); and
- a clamping finger (64) that is borne so as to be able to move on the plug (38) between a clamping position in which the finger (64) is latched behind the dog (60) so as to longitudinally clamp the plug (38) against the mould (12), and a release position in which the finger (64) is offset relative to the dog (60) so as to allow the plug (38) to slide towards its rear, disconnection position;
and **in that** the clamping finger (64) can be latched behind the dog (60) when the plug (38) occupies a position between the forwardmost, connection position and a latching position that is intermediate between the rearmost, disconnection position and the forwardmost, connection position, the clamping means being arranged such that the clamping finger (64) pulls the plug (38) as far as the forwardmost, connection position even if the plug (38) is not completely fitted together with the end pieces (54) of the half-mould (14, 16).

2. Device (10) according to the preceding claim, **characterized in that**, in the release position, the finger (64) is offset transversely relative to the dog (60) .

3. Device (10) according to the preceding claim, **characterized in that** the finger (64) is mounted on the plug so as to be able to pivot about a vertical axis (B).

4. Device (10) according to any one of the preceding claims, **characterized in that** the finger (64) is elastically returned towards its clamping position with a clamping force that is sufficient to completely fit the plug (38) together with the inlet and outlet orifices (30, 32) of the mould (12) .

5. Device (10) according to the preceding claim, **characterized in that** the finger (64) is attached to a lever arm (80) that allows the clamping finger (64) to be driven towards it release position when the end (82) of the lever arm (80) is urged transversely.

6. Device (10) according to the preceding claim, **characterized in that** the plug (38) comprises a lug (84) for controlling sliding, which lug is borne fixedly by the plug (38).

7. Device (10) according to any one of Claims 1 to 3, **characterized in that** the clamping finger (64) is held in position by a toggle mechanism that is borne by the plug (38).

8. Device (10) according to any one of Claims 1 to 3, **characterized in that** the clamping finger (64) is driven into its clamping position by a cam mechanism.

9. Device (10) according to any one of the preceding claims, **characterized in that** the mould (12) and the plug (38) are provided with electrical connection means comprising at least a first connector (104) borne by the mould and a second, complementary connector (108) borne by the plug (38), the first connector (104) and the second connector (108) being able to be fitted together longitudinally.
